# FASCICULE DE BREVET EUROPEEN

(11) **EP 2 226 586 B1**
(45) Date de publication et mention de la délivrance du brevet: **18.04.2018**
(21) Numéro de dépôt: 10155280.0
(22) Date de dépôt: 03.03.2010
(51) Int. Cl.: B60H 1/22, F24H 3/04, F24H 9/18, H05B 3/50

(54) **Dispositif de chauffage, notamment pour véhicule automobile**
Heizeinrichtung, insbesondere für ein Kraftfahrzeug
Heating device, in particular for motor vehicle

(30) Priorité: 03.03.2009 FR 0900957
(43) Date de publication de la demande: 08.09.2010
(73) Titulaire: Valeo Systèmes Thermiques, 78320 Le Mesnil Saint Denis (FR)
(72) Inventeur: Tellier, Laurent, 75116 Paris (FR); De Souza, Stéphane, 78220 - Viroflay (FR)
(74) Mandataire: Metz, Gaëlle

(56) Documents cités:
- EP-A- 1 462 733
- EP-A- 1 564 503
- EP-A- 1 643 805
- EP-A- 1 802 176
- EP-B1- 1 632 109
- DE-A1-102005 026 238
- US-A1- 2006 222 346
- US-A1- 2009 020 515

## Description

L'invention concerne un dispositif de chauffage ou radiateur électrique traversé par un flux d'air à chauffer. L'invention s'applique plus particulièrement aux appareils de chauffage et/ou climatisation de véhicules automobiles.

De façon habituelle, le réchauffage de l'air destiné au chauffage de l'habitacle d'un véhicule automobile, ainsi qu'au désembuage et au dégivrage est assuré par passage d'un flux d'air à travers un échangeur de chaleur.

Dans certains véhicules, on adjoint à l'échangeur de chaleur un dispositif de chauffage électrique disposé en aval de l'échangeur dans le conduit de circulation d'air à réchauffer. Ce dispositif de chauffage comporte des modules chauffants pour réaliser un appoint de chaleur quasiment immédiat, notamment dans certaines situations telles que :
- un préconditionnement avant démarrage du moteur pour assurer un réchauffement de l'habitacle, ainsi qu'un dégivrage ou désembuage, de façon télécommandée ou pré-programmée, avant utilisation du véhicule en environnement très froid,
- une montée très rapide souhaitée de la température dans l'habitacle,
- une incapacité de l'échangeur de chaleur à fournir les calories nécessaires à un réchauffage satisfaisant de l'air pour assurer les fonctions de chauffage ainsi que de dégivrage et désembuage éventuels, comme cela se produit pendant un certain temps après démarrage, avec certains types de moteurs à faible déperdition thermique.

Le fonctionnement du dispositif de chauffage électrique est commandé de façon temporaire, jusqu'à ce que l'échangeur de chaleur couplé au circuit moteur puisse seul assurer le chauffage de l'air de façon requise.

La commande du dispositif de chauffage est assurée par un circuit de commande monté par exemple sur une carte à circuit imprimé. Pour protéger un tel circuit de commande, par exemple contre des projections de poussières provenant de la zone du dispositif de chauffage contenant les modules chauffants, il est connu d'enrober la carte d'un revêtement de protection tel que de la résine. Cependant une telle protection peut s'avérer insuffisante.

Le document US 2009/0020515 A1 divulgue un dispositif de chauffage selon la préambule de la revendicaiton 1. Ce dispositif connu comporte une garniture d'étanchéité qui est formée comme un élément particulier.

L'invention a donc pour objectif de pallier cet inconvénient de l'art antérieur en proposant un dispositif de chauffage dont l'étanchéité est améliorée.

À cet effet, l'invention a pour objet un dispositif de chauffage pour réchauffer un flux d'air, comportant :
- un boîtier comprenant au moins un module chauffant destiné à être traversé par le flux d'air à réchauffer,
- un module de commande monté dans le boîtier, comportant :
   - un support d'un circuit de commande dudit module chauffant, et
   - au moins un connecteur pour relier le support au moins audit module chauffant,
caractérisé en ce que le connecteur comprend une pluralité de pistes conductrices sur lesquelles est surmoulée une garniture d'étanchéité agencée de manière à séparer, autrement dit de manière à étancher, la zone du boîtier comportant ledit module chauffant par rapport au volume du boîtier comportant ledit support, pour protéger le circuit de commande vis-à-vis de la zone du boîtier comportant ledit module chauffant.

Le surmoulage réalisé sur les pistes dudit connecteur de façon simple et rapide, permet d'isoler le support du circuit de commande par rapport aux modules chauffants pour le protéger d'agressions éventuelles provenant de la zone comportant les modules chauffants.

Ledit dispositif peut en outre comporter une ou plusieurs caractéristiques suivantes, prises séparément ou en combinaison :
- le connecteur comporte au moins cinq pistes conductrices reliées au circuit de commande, dont une première piste est reliée à un premier potentiel d'une source d'alimentation dans ledit véhicule, une seconde piste est reliée à un second potentiel de ladite source d'alimentation, et dont au moins une troisième, une quatrième et une cinquième pistes conduisent le courant vers des terminaux dudit module chauffant ;
- le connecteur traverse une ouverture du boîtier et le boîtier comporte un couvercle fermant ledit volume de façon à protéger le circuit de commande de l'environnement extérieur du boîtier ;
- la garniture d'étanchéité surmoulée est réalisée en une matière plastique configurée pour résister aux températures de fonctionnement dudit dispositif ;
- la garniture d'étanchéité surmoulée comporte une matière plastique rigide, telle que du polyester saturé ;
- la garniture d'étanchéité surmoulée comporte une matière plastique élastique, telle qu'un élastomère ;
- la matière plastique élastique est disposée entre ledit connecteur et le boîtier pour améliorer l'étanchéité ;
- ladite garniture d'étanchéité est configurée pour permettre un assemblage du module de commande avec le boîtier selon une direction sensiblement parallèle à l'axe longitudinal du boîtier ;
- ladite garniture d'étanchéité présente une forme complémentaire d'une rainure ménagée dans le boîtier ;
- ladite garniture d'étanchéité est configurée pour permettre un assemblage du module de commande avec le boîtier selon une direction sensiblement perpendiculaire à l'axe longitudinal du boîtier ;
- ladite garniture d'étanchéité comporte une rainure périphérique coopérant avec une nervure complémentaire du boîtier ;
- ledit dispositif comporte un élément d'étanchéité supplémentaire intercalé entre la garniture d'étanchéité surmoulée et le boîtier.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue partielle schématique d'un appareil de chauffage pour véhicule automobile,
- la figure 2 illustre partiellement un boîtier d'un dispositif de chauffage selon l'invention,
- la figure 3 représente un module chauffant pour un dispositif de chauffage selon l'invention,
- la figure 4 représente un premier mode de réalisation du connecteur surmoulé selon l'invention, et
- la figure 5 représente un second mode de réalisation du connecteur surmoulé monté dans un dispositif de chauffage selon l'invention.

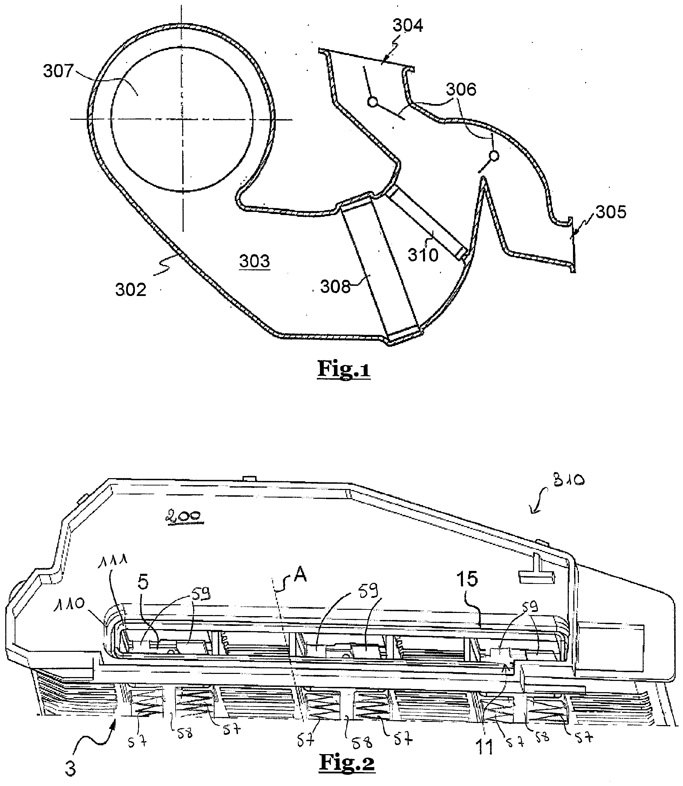

La figure 1 montre une partie d'un appareil de chauffage de véhicule automobile, comprenant un boîtier 302 délimitant un canal 303 pour le passage d'air à réchauffer. Le canal 303 amène l'air vers des bouches de chauffage et de désembuage/dégivrage 304,305 pour être distribué sélectivement dans l'habitacle selon les positions de volets de mixage et de distribution 306. Le débit d'air dans le canal 303 est produit par un ventilateur 307, ou pulseur, recevant de l'air extérieur ou de l'air de recirculation en provenance de l'habitacle. Le réchauffage de l'air, lorsqu'il est nécessaire, est assuré par un échangeur de chaleur à liquide éventuel 308, utilisant le liquide de refroidissement du moteur comme liquide caloporteur et par un radiateur électrique 310. L'échangeur 308 et le radiateur électrique 310 sont disposés dans le canal 303, le premier étant situé en amont du second. En l'absence d'échangeur 308, le chauffage de l'air est assuré par le seul dispositif de chauffage électrique 310.

En référence à la figure 2, un tel dispositif de chauffage électrique 310 comprend un boîtier 3 de forme générale sensiblement parallélépipédique, dans lequel sont logés des modules chauffants 5. Ces modules chauffants 5 sont disposés parallèlement les uns aux autres et s'étendent sur toute la longueur du boîtier 3, de manière à être exposés directement à l'air traversant ce boîtier 3.

Un module chauffant 5 peut comporter des éléments résistifs de type à coefficient de température positif (CTP). Ces éléments sont protégés contre des échauffements excessifs ou contre une surintensité.

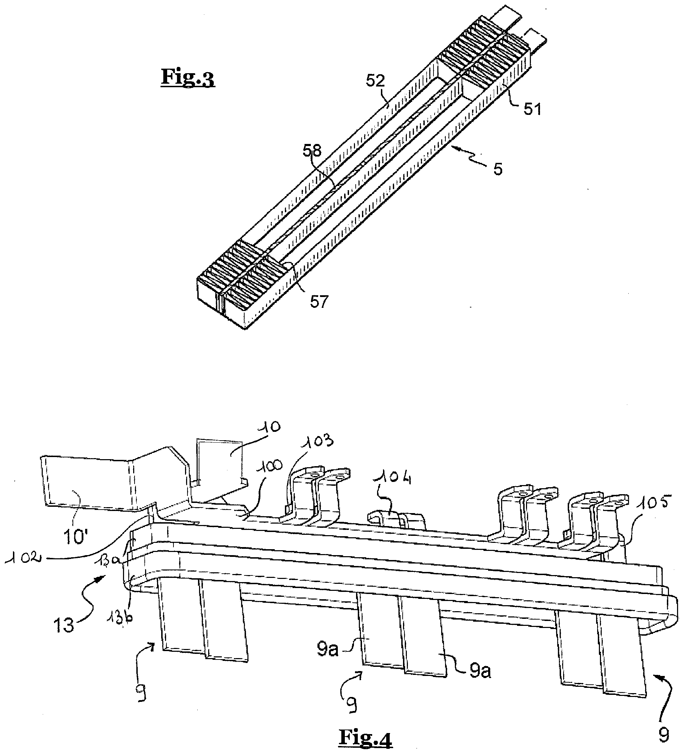

Selon une variante de réalisation illustrée sur la figure 3, un module chauffant 5 comporte deux électrodes 51,52 qui s'étendent longitudinalement, chacune enserrant un dissipateur thermique 57 formé par exemple d'un ruban métallique et venant en appui contre les éléments résistifs ou pierres CTP 58. Selon une autre variante de réalisation du module chauffant, les électrodes prennent en sandwich les éléments résistifs alors que les dissipateurs thermiques formés par le ruban métallique sont placés contre les faces extérieures libres desdites électrodes. En d'autres termes, le module chauffant est constitué de deux dissipateurs thermiques qui enserrent deux électrodes entre lesquels sont placés des pierres CTP ou éléments résistifs.

Les deux électrodes 51, 52 d'un module chauffant 5 sont parcourues par des potentiels électriques différents, par exemple un premier potentiel disponible dans le véhicule, tel que la tension de batterie, et un second potentiel, tel que la masse. Lorsque trois modules chauffants sont prévus, on a alors une rangée de six terminaux 59 à alimenter en énergie électrique.

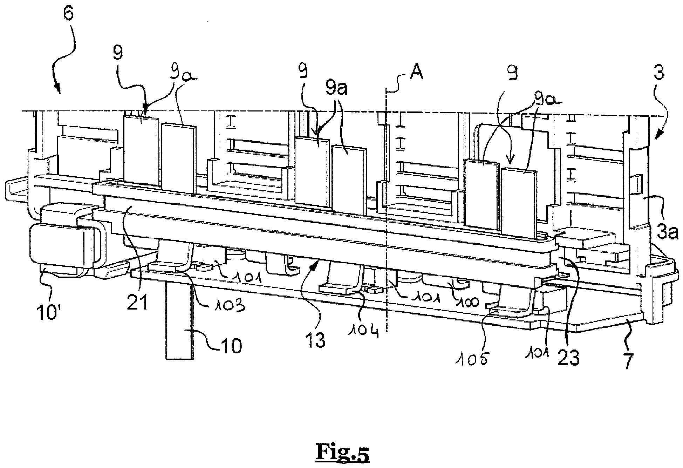

En référence aux figures 4 et 5, le contrôle du dispositif de chauffage électrique est assuré par un module de commande 6 d'alimentation électrique des modules chauffants 5.

Pour cela, le module de commande 6 comporte :
- un circuit de commande monté sur un support 7, par exemple une carte à circuit imprimé, relié à une source d'alimentation, et
- un connecteur 9 pour relier le circuit aux modules chauffants 5.

Dans l'exemple illustré, trois modules chauffants sont prévus et par conséquent le connecteur 9 présente six premières terminaisons 9a pour alimenter en énergie les six terminaux correspondants 59 (figure 2) des modules chauffants 5, par exemple via une connexion par soudure. En se référant à nouveau aux figures 4 et 5, le connecteur 9 est constitué d'au moins cinq pistes conductrices ou barreaux conducteurs d'électricité. Une première piste référencée 100 amène le «plus batterie» aux transistors électroniques 101, une deuxième piste 102 amène le potentiel électrique relié à la masse du véhicule alors qu'une troisième, quatrième et cinquième pistes respectivement référencées 103, 104 et 105 conduisent le courant électrique vers les terminaux 59 des modules chauffants 5 quand le transistor 101 concerné autorise le passage du courant. On notera que les terminaisons 9a font parties intégrantes de la piste concernée.

Par ailleurs, le connecteur 9 peut être relié au circuit imprimé sur le support 7 par refusion. Pour cela, les portions d'extrémité des pistes présentent une forme recourbée pour une soudure par refusion sur une plage conductrice associée du circuit.

Le circuit est quant à lui relié à une source d'alimentation par l'intermédiaire de deux connecteurs de faisceau électrique 10 et 10', dont un premier 10 peut être mis à un premier potentiel, et le second 10' à un second potentiel. Ces connecteurs font aussi partie intégrante de la première piste 100 et de la deuxième piste 102. On comprend donc que chaque piste est formée d'une pièce unique incluant la terminaison 9a, la piste et le connecteur de faisceau électrique, le cas échéant (pour la première et la deuxième piste).

En se référant à nouveau à la figure 2, le module de commande 6 s'étend dans un volume 200 du boîtier, et le connecteur 9 traverse une ouverture 11 du boîtier 3. Afin de protéger le circuit de l'environnement extérieur du boîtier 3, on peut prévoir un couvercle (non représenté) qui s'enfiche sur le boîtier 3 pour fermer l'ouverture 11.

Pour protéger le circuit des projections, par exemple de poussières ou d'eau, provenant de la zone du boîtier 3 comportant les modules chauffants 5 et risquant d'endommager le circuit électronique porté par le support 7, on prévoit alors de séparer ou étancher la zone du boîtier 3 comportant les modules chauffants 5 par rapport au volume 200 du boîtier 3 comportant le support 7 du circuit.

À cet effet, une garniture d'étanchéité 13 (voir figures 4 et 5) est surmoulée sur les pistes 101 à 105 de sorte à former le connecteur 9, autrement appelé moyen de connexion électrique, entre le support 7 du circuit, les modules chauffants 5 et la source d'alimentation électrique. On entend ici par surmoulage l'injection locale d'une matière autour des pistes, au niveau d'une zone située entre les terminaisons 9a et les portions d'extrémité des pistes, c'est-à-dire dans une zone où les pistes présentent une extension parallèle les unes aux autres. La matière ainsi surmoulée s'étend entre chaque piste de sorte à former un obstacle à la circulation de l'air et ainsi fermer l'ouverture 11.

Le surmoulage crée ainsi une pièce intermédiaire solidaire et indépendante qui maintient en position chacune des pistes et rend l'ensemble unitaire. La matière utilisée pour le surmoulage est un plastique rigide résistant au haute température consécutive à la refusion. Ces plastiques de la famille des polyester saturé sont par exemple : le Polybutylène Téréphtalate (PBT) ou le Polychlorotrifluoroéthylène (PCT).

Selon une variante de l'invention, le plastique utilisé pour surmouler les pistes est un plastique souple aux propriétés caoutchouteuses comme par exemple le Terpolymère d'éthylène-propylène-diène (EPDM).

On notera également qu'une combinaison de plastiques peut être envisagée en utilisant un plastique rigide 13a formant armature et donnant la structure mécanique au connecteur 9 et un plastique plus souple 13b qui améliore la fonction d'étanchéité grâce à la souplesse de ce plastique.

Ainsi, on peut réaliser de façon simple et rapide une protection contre l'eau ou les poussières du circuit sans nécessiter d'opération de dépôt de revêtement de protection comme de la résine, sur le support 7 du circuit ou encore d'ajout d'une pièce additionnelle pour assurer l'étanchéité.

Un tel dispositif de chauffage pouvant atteindre en fonctionnement des températures élevées, par exemple de l'ordre de 150°C, cette garniture d'étanchéité 13 est surmoulée en une matière plastique capable de résister à de telles températures.

De même, le boîtier 3 et le couvercle (non représenté), sont réalisés en un matériau, par exemple plastique, capable de supporter les températures élevées atteintes en fonctionnement.

Par ailleurs, selon un premier mode de réalisation illustré sur la figure 4, la garniture d'étanchéité 13 est configurée pour permettre l'assemblage du connecteur 9 avec le boîtier 3 selon une direction sensiblement parallèle à l'axe longitudinal A du boîtier 3.

Plus précisément, la garniture d'étanchéité 13 présente une forme complémentaire d'une rainure 15 (figure 2) ménagée à la périphérie de l'ouverture 11 du boîtier 3 pour recevoir la garniture d'étanchéité 13. La rainure 15 est délimitée par deux bords ou flancs latéraux 110 et 111 qui assurent le blocage de la garniture d'étanchéité 13, une fois le module de commande 6 mis en place sur le dispositif de chauffage. Bien entendu, on peut prévoir que la garniture d'étanchéité 13 présente une rainure de forme complémentaire d'une nervure correspondante ménagée au niveau de l'ouverture 11 du boîtier 3.

Un second mode de réalisation illustré sur la figure 5, diffère du premier mode de réalisation par le fait que la garniture d'étanchéité 13 est configurée pour permettre l'assemblage du module de commande 6, et donc du connecteur 9, avec le boîtier 3 selon une direction sensiblement perpendiculaire à l'axe longitudinal A du boîtier 3.

Dans ce second mode de réalisation, la garniture d'étanchéité 13 présente au moins une rainure 21 périphérique coopérant avec une nervure complémentaire 23 prévue sur le boîtier 3. On comprend qu'un tel montage interdit toute circulation d'air entre la partie du boîtier 3 qui contient les modules chauffant 5 et le volume 200, neutralisant ainsi le passage de gouttes d'eau ou poussières susceptibles de dégrader le fonctionnement électrique du circuit imprimé, et d'une manière plus générale du module de commande 6.

De plus, le boîtier 3 comporte un premier demi-boîtier 3a et un second demi-boîtier (non représenté) qui vient se fixer sur le premier demi-boîtier 3a. À cet effet, le premier demi-boîtier 3a peut comporter sur ses parois longitudinales externes, des encoches destinées à accueillir des clips ou agrafes formés sur le second demi-boîtier. Dans ce cas, les deux demi-boîtiers comportent la nervure 23 pour coopérer avec la rainure périphérique 21 de la garniture d'étanchéité 13.

Ainsi, lorsque les deux demi-boîtiers sont séparés, le module de commande 6 est assemblé avec le premier demi-boîtier 3a par coopération de la rainure périphérique 21 avec la nervure 23, puis de façon analogue avec le second demi-boîtier.

En outre, afin de renforcer la protection du circuit, on peut prévoir un élément d'étanchéité supplémentaire (non représenté) intercalé entre la garniture d'étanchéité 13 et le boîtier 3, tel qu'un joint ménagé dans la rainure 21 prévue sur la garniture d'étanchéité 13, ou encore une lèvre prolongeant la garniture d'étanchéité 13.

On comprend donc qu'un tel dispositif présente une protection du circuit de commande optimisé d'une part avec l'environnement extérieur du boîtier 3 et en outre avec la zone intérieure du boîtier 3 contenant les modules chauffants 5, zone dans laquelle circule un flux d'air sous pression et mis en mouvement par le pulseur de l'installation de ventilation, chauffage et/ou climatisation incorporant le dispositif de chauffage selon l'invention.

## Revendications

1. Dispositif de chauffage pour réchauffer un flux d'air, comportant :
- un boîtier (3) comprenant au moins un module chauffant (5) destiné à être traversé par le flux d'air à réchauffer,
- un module de commande (6) monté dans le boîtier (3), comportant :
• un support (7) d'un circuit de commande dudit module chauffant (5), et
• au moins un connecteur (9) pour relier le support (7) au moins audit module chauffant (5),
**caractérisé en ce que** le connecteur comprend une pluralité de pistes conductrices (100 - 105) sur lesquelles est surmoulée une garniture d'étanchéité (13) agencée de manière à séparer la zone du boîtier (3) comportant ledit module chauffant (5) du volume (200) du boîtier (3) comportant ledit support (7), pour protéger le circuit de commande vis-à-vis de la zone du boîtier (3) comportant ledit module chauffant (5).

2. Dispositif selon la revendication 1, **caractérisé en ce que** le connecteur (9) comporte au moins cinq pistes conductrices reliées au circuit de commande, dont :
- une première piste (100) est reliée à un premier potentiel d'une source d'alimentation dans ledit véhicule,
- une seconde piste (102) est reliée à un second potentiel de ladite source d'alimentation, et dont
- au moins une troisième, une quatrième et une cinquième pistes (103,104,105) conduisent le courant vers des terminaux (59) dudit module chauffant (5).

3. Dispositif selon l'une des revendications 1 ou 2, **caractérisé en ce que** le connecteur (9) traverse une ouverture (11) du boîtier (3) et **en ce que** le boîtier (3) comporte un couvercle fermant ledit volume (200) de façon à protéger le circuit de commande de l'environnement extérieur du boîtier (3).

4. Dispositif selon l'une quelconque des revendications 1 à 3, **caractérisé en ce que** la garniture d'étanchéité (13) surmoulée est réalisée en une matière plastique configurée pour résister aux températures de fonctionnement dudit dispositif.

5. Dispositif selon la revendication 4, **caractérisé en ce que** la garniture d'étanchéité (13) surmoulée comporte une matière plastique rigide, telle que du polyester saturé.

6. Dispositif selon l'une des revendications 4, **caractérisé en ce que** la garniture d'étanchéité (13) surmoulée comporte une matière plastique élastique, telle qu'un élastomère.

7. Dispositif selon la revendication 6, **caractérisé en ce que** la matière plastique élastique est disposée entre ledit connecteur (9) et le boîtier (3) pour améliorer l'étanchéité.

8. Dispositif selon l'une quelconque des revendications 1 à 7, **caractérisé en ce que** ladite garniture d'étanchéité (13) est configurée pour permettre un assemblage du module de commande (6) avec le boîtier (3) selon une direction sensiblement parallèle à l'axe longitudinal (A) du boîtier (3).

9. Dispositif selon la revendication 8, **caractérisé en ce que** ladite garniture d'étanchéité (13) présente une forme complémentaire d'une rainure (15) ménagée dans le boîtier (3).

10. Dispositif selon l'une quelconque des revendications 1 à 7, **caractérisé en ce que** ladite garniture d'étanchéité (13) est configurée pour permettre un assemblage du module de commande (6) avec le boîtier (3) selon une direction sensiblement perpendiculaire à l'axe longitudinal (A) du boîtier (3).

11. Dispositif selon la revendication 10, **caractérisé en ce que** ladite garniture d'étanchéité (13) comporte une rainure périphérique (21) coopérant avec une nervure complémentaire (23) du boîtier (3).

12. Dispositif selon l'une quelconque des revendications 1 à 11, **caractérisé en ce qu'**il comporte un élément d'étanchéité supplémentaire intercalé entre la garniture d'étanchéité (13) surmoulée et le boîtier (3).

13. Installation de ventilation, chauffage et/ou climatisation **caractérisé en ce qu'**elle comprend un dispositif de chauffage selon l'une quelconque des revendications 1 à 12.

## Patentansprüche

1. Heizvorrichtung zum Erwärmen eines Luftstroms, die aufweist:
- ein Gehäuse (3), das mindestens ein Heizmodul (5) enthält, das dazu bestimmt ist, vom zu erwärmenden Luftstrom durchquert zu werden,
- ein in das Gehäuse (3) montiertes Steuermodul (6), das aufweist:
• einen Träger (7) einer Steuerschaltung des Heizmoduls (5), und
• mindestens einen Verbinder (9), um den Träger (7) mindestens mit dem Heizmodul (5) zu verbinden,
**dadurch gekennzeichnet, dass** der Verbinder eine Vielzahl von Leiterbahnen (100-105) enthält, auf die eine Dichtung (13) aufgeformt ist, die so angeordnet ist, dass sie den das Heizmodul (5) aufweisenden Bereich des Gehäuses (3) vom den Träger (7) aufweisenden Volumen (200) des Gehäuses (3) trennt, um die Steuerschaltung vor dem das Heizmodul (5) aufweisenden Bereich des Gehäuses (3) zu schützen.

2. Vorrichtung nach Anspruch 1, **dadurch gekennzeichnet, dass** der Verbinder (9) mindestens fünf Leiterbahnen aufweist, die mit der Steuerschaltung verbunden sind, von denen:
- eine erste Bahn (100) mit einem ersten Potential einer Versorgungsquelle im Fahrzeug verbunden ist,
- eine zweite Bahn (102) mit einem zweiten Potential der Versorgungsquelle verbunden ist, und von denen
- mindestens eine dritte, eine vierte und eine fünfte Bahn (103, 104, 105) den Strom zu Endgeräten (59) des Heizmoduls (5) leiten.

3. Vorrichtung nach einem der Ansprüche 1 oder 2, **dadurch gekennzeichnet, dass** der Verbinder (9) eine Öffnung (11) des Gehäuses (3) durchquert, und dass das Gehäuse (3) einen Deckel aufweist, der das Volumen (200) schließt, um die Steuerschaltung vor der Außenumgebung des Gehäuses (3) zu schützen.

4. Vorrichtung nach einem der Ansprüche 1 bis 3, **dadurch gekennzeichnet, dass** die aufgeformte Dichtung (13) aus einem Kunststoff hergestellt ist, der konfiguriert ist, gegenüber den Betriebstemperaturen der Vorrichtung beständig zu sein.

5. Vorrichtung nach Anspruch 4, **dadurch gekennzeichnet, dass** die aufgeformte Dichtung (13) einen steifen Kunststoff wie ein gesättigtes Polyester aufweist.

6. Vorrichtung nach einem der Ansprüche 4, **dadurch gekennzeichnet, dass** die aufgeformte Dichtung (13) einen elastischen Kunststoff wie ein Elastomermaterial aufweist.

7. Vorrichtung nach Anspruch 6, **dadurch gekennzeichnet, dass** der elastische Kunststoff zwischen dem Verbinder (9) und dem Gehäuse (3) angeordnet ist, um die Dichtheit zu verbessern.

8. Vorrichtung nach einem der Ansprüche 1 bis 7, **dadurch gekennzeichnet, dass** die Dichtung (13) konfiguriert ist, einen Zusammenbau des Steuermoduls (6) mit dem Gehäuse (3) gemäß einer Richtung im Wesentlichen parallel zur Längsachse (A) des Gehäuses (3) zu erlauben.

9. Vorrichtung nach Anspruch 8, **dadurch gekennzeichnet, dass** die Dichtung (13) eine Form komplementär zu einer im Gehäuse (3) ausgesparten Rille (15) aufweist.

10. Vorrichtung nach einem der Ansprüche 1 bis 7, **dadurch gekennzeichnet, dass** die Dichtung (13) konfiguriert ist, einen Zusammenbau des Steuermoduls (6) mit dem Gehäuse (3) gemäß einer Richtung im Wesentlichen lotrecht zur Längsachse (A) des Gehäuses (3) zu erlauben.

11. Vorrichtung nach Anspruch 10, **dadurch gekennzeichnet, dass** die Dichtung (13) eine Umfangsrille (21) aufweist, die mit einer komplementären Rippe (23) des Gehäuses (3) zusammenwirkt.

12. Vorrichtung nach einem der Ansprüche 1 bis 11, **dadurch gekennzeichnet, dass** sie ein zusätzliches Dichtungselement aufweist, das zwischen die aufgeformte Dichtung (13) und das Gehäuse (3) eingefügt ist.

13. Lüftungs-, Heiz- und/oder Klimatisierungsanlage, **dadurch gekennzeichnet, dass** sie eine Heizvorrichtung nach einem der Ansprüche 1 bis 12 enthält.

## Claims

1. Heating device for heating up a flow of air, comprising:
- a housing (3) comprising at least one heating module (5) intended to have the flow of air that is to be heated up passing through it,
- a control module (6) mounted in the housing (3), comprising:
• a support (7) for a control circuit controlling the said heating module (5), and
• at least one connector (9) for connecting the support (7) at least to the said heating module (5),
**characterized in that** the connector comprises a plurality of conducting tracks (100-105) over which is overmoulded a sealing gasket (13) designed to separate the zone of the housing (3) comprising the said heating module (5) from the volume (200) of the housing (3) comprising the said support (7), so as to protect the control circuit with respect to the zone of the housing (3) comprising the said heating module (5).

2. Device according to Claim 1, **characterized in that** the connector (9) comprises at least five conducting tracks connected to the control circuit, of which:
- a first track (100) is connected to a first potential of a power supply source in the said vehicle,
- a second track (102) is connected to a second potential of the said power supply source, and of which
- at least a third, a fourth and a fifth tracks (103, 104, 105) carry current to terminals (59) of the said heating module (5).

3. Device according to one of Claims 1 and 2, **characterized in that** the connector (9) passes through an opening (11) in the housing (3), and **in that** the housing (3) comprises a cover closing the said volume (200) so as to protect the control circuit from the environment external to the housing (3).

4. Device according to any one of Claims 1 to 3, **characterized in that** the overmoulded sealing gasket (13) is made from a plastics material configured to withstand the operating temperatures of the said device.

5. Device according to Claim 4, **characterized in that** the overmoulded sealing gasket (13) comprises a rigid plastics material such as saturated polyester.

6. Device according to one of Claims 4, **characterized in that** the overmoulded sealing gasket (13) comprises an elastic plastics material such as an elastomer.

7. Device according to Claim 6, **characterized in that** the elastic plastics material is arranged between the said connector (9) and the housing (3) to improve the sealing.

8. Device according to any one of Claims 1 to 7, **characterized in that** the said sealing gasket (13) is configured to allow the control module (6) to be assembled with the housing (3) in a direction substantially parallel to the longitudinal axis (A) of the housing (3).

9. Device according to Claim 8, **characterized in that** the said sealing gasket (13) has a shape that complements a groove (15) formed in the housing (3) .

10. Device according to any one of Claims 1 to 7, **characterized in that** the said sealing gasket (13) is configured to allow the control module (6) to be assembled with the housing (3) in a direction substantially perpendicular to the longitudinal axis (A) of the housing (3).

11. Device according to Claim 10, **characterized in that** the said sealing gasket (13) comprises a peripheral groove (21) collaborating with a complementary rib (23) of the housing (3).

12. Device according to any one of Claims 1 to 11, **characterized in that** it comprises an additional sealing element interposed between the overmoulded sealing gasket (13) and the housing (3).

13. Heating, ventilation and/or air-conditioning installation, **characterized in that** it comprises a heating device according to any one of Claims 1 to 12.
